# EUROPÄISCHE PATENTANMELDUNG

(11) **EP 3 159 551 A1**
(43) Veröffentlichungstag der Anmeldung: **26.04.2017**
(21) Anmeldenummer: 16194212.3
(22) Anmeldetag: 17.10.2016
(51) Int. Cl.: F16B 2/08, F16B 5/06, F16B 7/04

(54) **SPANNVORRICHTUNG**

(30) Priorität: 23.10.2015 DE 202015105657 U
(71) Anmelder: Philipp GmbH, 63741 Aschaffenburg (DE)
(72) Erfinder: Mayer, Michael, 63741 Aschaffenburg (DE)
(74) Vertreter: WSL Patentanwälte Partnerschaft mbB

(57) **Zusammenfassung**

Die vorliegende Erfindung betrifft eine Spannvorrichtung (1) für ein flaches Spannband (2), wobei die Spannvorrichtung (1) ein Spannelement (3) und zwei Anschlussstücke (4) mit je einer Spannelementaufnahme (6) für die lösbare Befestigung von einem Ende (3a) des Spannelementes (3), einer Oberseite (4d) und einer Unterseite (4c) aufweist, wobei die Anschlussstücke (4) über das Spannelement (3) lösbar miteinander und mit einem Spannband (2) verbindbar sind. Um eine einfach handhabbare Spannvorrichtung bereitzustellen die eine relativ einfache Anpassung an unterschiedliche Durchmesser erlaubt, wird erfindungsgemäß vorgeschlagen, dass zumindest eines der Anschlussstücke (4) ein Klemmelement (5) zum lös- und einstellbaren Festklemmen eines Endabschnittes (2a) des Spannbandes (2) aufweist.

## Beschreibung

Die vorliegende Erfindung betrifft eine Spannvorrichtung für ein flaches Spannband, wobei die Spannvorrichtung ein Spannelement und zwei Anschlussstücke mit je einer Spannelementaufnahme für die lösbare Befestigung von einem Ende des Spannelementes, einer Oberseite und einer Unterseite aufweist, wobei die Anschlussstücke über das Spannelement lösbar miteinander und mit einem Spannband verbindbar sind.

Mit einer Spannvorrichtung können mehrere Gegenstände verzurrt, eine Ladung gesichert oder zwei bzw. mehr Gegenstände aneinander befestigt werden. Zum Verzurren, Sichern oder Befestigen mehrerer Gegenstände wird das Spannband, um einen Gegenstand oder mehrere Gegenstände herumgeführt. Die zwei freien Enden des um einen Gegenstand herumgeführten Spannbandes werden mit zwei Anschlusstücken der Spannvorrichtung verbunden, die dann wiederum über ein Spannelement miteinander verbunden werden, welches nach dem Herumlegen des Spannbandes um einen Gegenstand einen verbleibenden, kurzen Abstand zwischen den Anschlussstücken überbrückt, die mit den Enden des Spannbandes fest verbunden sind. Das Spannband bildet dann zusammen mit den Anschlussstücken und dem Spannelement einen Ring, der den Gegenstand bzw. die Gegenstände umgibt. Der relative Abstand zwischen den Anschlussstücken kann durch Betätigen des Spannelementes, welches die zwei Anschlussstücke miteinander verbindet, vergrößert oder verkleinert werden. Wird der Abstand zwischen den Anschlussstücken verkleinert, verkleinert sich der Umfang des Ringes um diese Abstandsänderung und damit auch der Ringdurchmesser. Das auf den Umfang des zu umspannenden Gegenstandes abgestimmte Spannband wird so gespannt. Wird der Abstand zwischen den Anschlusstücken vergrößert, vergrößert sich auch der Ringdurchmesser und das Spannband wird gelockert.

Mit Hilfe einer solchen Spannvorrichtung kann auch ein zweiter Gegenstand an einem ersten Gegenstand, um dessen Umfang das Spannband herumgeführt ist, befestigt werden, ohne dass der erste Gegenstand irgendwelche zusätzlichen Befestigungsmittel aufweisen oder beschädigt (z.B. angebohrt) werden muss. Ein Beispiel für eine solche Befestigung ist die Befestigung von Hinweisschildern oder Anzeigetafeln an Straßenlaternen oder Ampeln. Das Spannband wird um den Umfang des Laternenmastes herumgeführt und mit der Spannvorrichtung gespannt. An dem Spannband kann die Anzeigetafel befestigt werden. Beispielsweise kann das Spannband durch Ösen in der Anzeigetafel geführt sein, sodass beim Spannen des Spannbandes die Anzeigentafel an dem Laternenmast befestigt wird.

Herkömmliche Spannvorrichtungen sind für das Spannen schmaler Spannbänder mit einer geringen Länge vorgesehen. Die erforderliche Kraft zum Spannen der Spannvorrichtung ist daher verhältnismäßig niedrig, sodass die Anschlussstücke beim Spannen mit einer Hand in Position gehalten werden können, während mit der zweiten Hand das Spannelement betätigt werden kann.

Die Spannvorrichtungen der vorliegenden Erfindung sind jedoch in erster Linie für relativ lange Schwerlastspannbänder, d.h. für Spannbänder mit einer Breite ab 5 cm und einer Länge > 16 m und einer Tragfähigkeit von > 300 kg, vorgesehen. Die Handhabung solcher Spannvorrichtungen ist oftmals schwierig. Sollen die Spannvorrichtungen zudem zum Befestigen von Gegenständen an der Außenfläche von Säulen oder Türmen in großen Höhen verwendet werden, ist es notwendig einfach handhabbare Spannvorrichtungen bereitzustellen, die auch eine Anpassung an unterschiedliche Durchmesser erlaubt.

Aufgabe der vorliegenden Erfindung ist es daher eine einfach handhabbare Spannvorrichtung bereitzustellen die eine relativ einfache Anpassung an unterschiedliche Durchmesser erlaubt. In mindestens einer Ausführungsform soll das Spannband für die Befestigung von Gegenständen an der Außenseite von Windkrafttürmen geeignet sein.

Diese Aufgabe wird dadurch gelöst, dass zumindest eines der Anschlussstücke ein Klemmelement zum lös- und einstellbaren Festklemmen eines Endabschnittes des Spannbandes aufweist.

Das lös- und einstellbare Festklemmen eines Endabschnittes des Spannbandes ermöglicht eine Anpassung an einen unterschiedlichen Durchmesser, wie er in aller Regel bei sich in etwa konisch verjüngenden Windkrafttürmen auftritt. Das Spannband kann in einem solchen Fall z. B. zur Befestigung einer Radaranlage dienen, wobei die Befestigungshöhe durch Anpassung der effektiven Spannbandlänge frei wählbar ist, indem die Einklemmposition eines Endes des Spannbandes an mindestens einem Anschlussstück verändert wird.

In einer Ausführungsform ist das Spannband ein flaches Stahlband, insbesondere ein Edelstahlband. Generell sind besonders reißfeste und witterungsbeständige Spannbänder bevorzugt, die auch aus Kompositmaterial wie zum Beispiel einem Faserverbund bestehen können, welches gegebenenfalls eine witterungsfeste äußere Beschichtung aufweist.

Beispielhaft wird nachfolgend die Spannvorrichtung im Betrieb zusammen mit einem Turm für eine Windkraftanlage beschrieben, an dem die Spannvorrichtung befestigt werden soll. Die Annahme dient allein der Vereinfachung der Beschreibung der Erfindung und beschränkt die Erfindung nicht auf eine derartige Verwendung mit einem Turm für eine Windkraftanlage.

Im Betrieb der Vorrichtung wird das Spannband um den Turm für eine Windkraftanlage herumgeführt. Je ein freies Ende des Spannbandes wird mit dem ersten bzw. zweiten Anschlussstück der Spannvorrichtung verbunden. Die der Turmaußenseite zuzuwendenden Unterseiten der Anschlussstücke bilden eine Auflage- bzw. Anlagefläche, mit der die Anschlussstücke gegenüber der Außenwand des Turms abgestützt werden und die ein Verdrehen der Anschlusstücke und des Spannbandes beim Spannen verhindern. Die zwei Anschlussstücke der Spannvorrichtung sind wiederrum über das Spannelement lösbar miteinander verbunden. Das Spannband bildet zusammen mit den Anschlussstücken und dem Spannelement einen Ring, der um die Außenkontur des Turms geführt ist. Durch Betätigen des Spannelementes ist der Abstand zwischen den Anschlussstücken einstellbar, d.h. der Abstand zwischen den Anschlussstücken kann vergrößert oder verringert werden. Auf diese Weise kann der Ringdurchmesser vergrößert oder verkleinert werden. Beim Verkleinern wird der Ring kraftschlüssig mit der Außenwand des Turms verbunden.

Weil das Spannelement lösbar mit den Spannelementaufnahmen verbindbar ist, ist es möglich die Spannvorrichtung und damit den Ring jederzeit zu öffnen. Der Ring kann auf diese Weise um die Außenkontur des Turms herumgeführt werden. Da zumindest eines der Anschlusstücke ein Klemmelement aufweist, mit dem ein Endabschnitt des Spannbandes lös- und einstellbar festgeklemmt werden kann, kann das Spannband zunächst um den Turm herumgeführt und anschließend mit dem Klemmelement in Eingriff gebracht werden, ohne dass das Spannband zuvor passgenau für den jeweiligen Turmumfang zugeschnitten werden muss. Nach dem Festklemmen des Spannbandes mit dem Klemmelement kann daher zunächst das gewünschte Ergebnis der Montage kontrolliert und gegebenenfalls durch eine Neueinstellung des Klemmelementes korrigiert werden. Die Lösbarkeit der Klemmung ermöglicht es auch, dass das Spannband wieder von dem Anschlussstück mit dem Klemmelement gelöst und zusammen mit einem anderen Spannband wiederverwendet werden kann.

In einer Ausführungsform ist zumindest das Anschlussstück mit dem Klemmelement aus Vollmaterial, hergestellt, wobei vorzugsweise das Klemmelement und das Spannband aus demselben Material, vorzugsweise aus Edelstahl hergestellt sind. Edelstahl ist seewasserfest und daher für die Verwendung von Spannvorrichtungen in einer Meerwasserumgebung besonders gut geeignet. Die aus Vollmaterial hergestellten Anschlussstücke sind stabiler und für die Abstützung größerer Lasten geeignet. Insbesondere weisen die Anschlussstücke keine Hohlräume auf, die die Stabilität der Anschlussstücke verringern könnten.

In einer Ausführungsform weist zumindest das Anschlussstück mit dem Klemmelement ein im Wesentlichen L-förmiges Profil mit einem ersten Schenkel und einem zweiten Schenkel auf, wobei der erste Schenkel die Unterseite des Anschlussstückes, eine Oberseite sowie das Klemmelement und der zweite Schenkel die Spannelementaufnahme aufweisen. Bedingt durch L-Profilform des Anschlussstückes erstreckt sich der zweite Schenkel senkrecht zu der Unterseite des ersten Schenkels. Da der zweite Schenkel die Spannelementaufnahme aufweist, ist diese in einem größeren Abstand von der Außenwand des Turms angeordnet. Der Abstand zwischen der Außenwand des Turms und der Spannelementaufnahmen erleichtert den Zugriff auf das Spannelement mit Werkzeugen, mit denen das Spannelement betätigt werden kann.

In einer weiteren Ausführungsform weist der zweite Schenkel die Öffnung zum Hindurchführen des Spannbands auf. Zweckmäßigerweise ist die Öffnung in der Verlängerung des Klemmelementes, d.h. in Längsrichtung des Spannbandes, angeordnet, sodass das Spannband mit dem Klemmelement in Eingriff gebracht und durch die Öffnung hindurchgeführt werden kann.

In einer weiteren Ausführungsform, weist zumindest ein freies Ende des flachen Spannbandes einen Abschnitt auf, der nicht durch die Öffnung passt. Beispielsweise kann das Spannband vor oder nach dem Hindurchführen durch die Öffnung des Anschlussstückes umgebogen oder mit einem Endstück versehen werden, welches nicht durch die Öffnung des Anschlussstücks passt. Auf diese Weise kann das Spannband zusätzlich gesichert werden.

In einer weiteren Ausführungsform ist das Klemmelement auf der Oberseite des ersten Schenkels von dem zumindest einen Anschlussstück mit dem Klemmelement angeordnet. Weist das Klemmelement eine Platte und Befestigungsmittel zum kraftschlüssigen Verbinden des Spannbandes auf, kann das Spannband zwischen der Platte und der Oberseite des ersten Schenkels eingeklemmt werden, wobei das Befestigungsmittel die Platte auf die Oberseite des ersten Schenkels presst.

Die Anschlussstücke können auch einstückig hergestellt sein, d.h. der erste und zweite Schenkel eines Anschlussstückes sind einstückig miteinander verbunden.

In einer weiteren Ausführungsform weist das Klemmelement eine Platte und Befestigungsmittel zum kraftschlüssigen Verbinden des Spannbandes zwischen der Platte und der Oberseite des Anschlussstückes auf. Das Spannband kann zwischen der Oberseite des Anschlussstückes und der Platte des Klemmelementes gelegt werden, wobei durch Betätigen der Befestigungsmittel die Platte auf die Oberseite des Anschlussstückes gepresst und das dazwischenliegende Spannband festgeklemmt wird. Vor dem Betätigen des Befestigungsmittels oder nach dem Lösen des Befestigungsmittels kann die Position des Spannbandes unter der Platte korrigiert werden. In einer Ausführungsform weist das Befestigungsmittel eine, vorzugsweise zwei Schrauben, auf, die beim Anziehen die Platte auf die Oberseite des Anschlussstückes pressen. Zur Verbesserung der Haltekraft kann die Oberseite des Anschlussstückes zumindest im Bereich des Klemmelementes und/oder die der Oberseite des Anschlussstückes zugewandte Unterseite der Platte des Klemmelementes eine Profilierung aufweisen, die die Reibung zwischen dem Spannband und der Oberseite des Anschlussstückes bzw. der Unterseite der Platte des Klemmelementes erhöht. Die Profilierung kann sich auch abschnittsweise in die Oberfläche des Spannbandes drücken und beim Festklemmen eine formschlüssige Verbindung mit Spannband bilden.

Die Oberseite des Anschlussstückes mit dem Klemmelement weist in einerweiteren Ausführungsform eine Vertiefung auf, in der das Spannband und die darüber angeordnete Platte des Klemmelements zumindest abschnittsweise angeordnet werden können. Eine oder mehrere Kanten der Oberseite des Anschlussstückes sind bei einer weiteren Ausführungsform abgerundet oder weisen eine Fase auf, sodass an der Kante des Anschlussstückes über die das Spannband geführt wird keine Belastungsspitzen auftreten, die das Spannband beschädigen können.

In einer weiteren Ausführungsform weist das zumindest eine Anschlussstück mit dem Klemmelement eine vorzugsweise schlitzförmige Öffnung zum Hindurchführen des Spannbands auf. Durch die Öffnung kann das Spannband hindurchgeführt und zunächst mit dem Klemmelement befestigt werden, bevor es auf die erforderliche Länge zum Beispiel zum Umspannen des jeweiligen Gegenstandes, an dem es befestigt werden soll, gekürzt wird. Es ist daher nicht erforderlich, zunächst die Umfangslänge des Turmabschnittes zu bestimmen, an dem die Spannvorrichtung befestigt werden soll. Auf diese Weise kann ein Arbeitsschritt eingespart und Messfehler vermieden werden. Der durch die Öffnung in dem Anschlussstück geführte Abschnitt des Spannbandes kann außerdem leichter festgehalten werden, während das Spannband mit dem Klemmelement befestigt wird. Anschließend kann das Spannband entweder umgefaltet, unter das zweiten Anschlussstück und das gegenüberliegenden Ende des Spannbandes geführt oder durch Abtrennen des durch die Öffnung hindurchgeführten Spannbandabschnittes gekürzt werden.

In einer Ausführungsform ist das Spannelement eine Gewindestange und die Spannelementaufnahme eine Bohrung durch die die Gewindestange hindurchführbar ist. Die Bohrung kann eine Gewindebohrung zum in Eingriff bringen mit dem Gewinde der Gewindestange sein oder eine Durchbrechung ohne eine Innenwandprofil. Die Gewindestange kann mit zumindest einer Schraubenmutter in Eingriff gebracht werden. Durch Anziehen der Schraubenmutter wird der Abstand zwischen den Anschlussstücken verringert. Das Spannelement kann auch aus mehreren parallelen Gewindestangen bestehen, die zwischen den Anschlussstücken vorzugsweise nahe oder auf der gedachten Verbindungsebene der Spannbandenden angeordnet sind.

In einer weiteren Ausführungsform weist die Unterseite des zumindest einen Anschlussstückes mit dem Klemmelement eine Beschichtung, vorzugsweise aus Silikon, und/oder eine elastisch nachgiebige Unterlegplatte, vorzugsweise aus Silikon, auf. Die Silikonbeschichtung verhindert, dass die Außenwand des Turms durch die Spannvorrichtung beschädigt wird. Alternativ oder zusätzlich zu der Beschichtung kann auch eine Unterlegplatte vorgesehen sein, die dicker als eine Beschichtung ausgeführt ist und u. a. schwingungsdämpfend wirkt. Mit der Unterlegplatte können zudem kleinere Unebenheiten in der Außenwand des Turms und/oder der Oberfläche der Unterseite des Anschlussstückes ausgeglichen werden.

In einer Ausführungsform sind beide Anschlussstücke gleich ausgestaltet.

In einer weiteren Ausführungsform weist die Spannvorrichtung mit zwei gleich ausgestalteten Anschlussstücken ein flaches Spannband mit zwei freien Enden auf, wobei je ein freies Ende des Spannbandes mit dem Klemmelement eines der beiden Anschlussstücke lös- und einstellbar verbunden ist.

In einer weiteren Ausführungsform ist das Spannband zumindest auf einer Seite, vorzugsweise jedoch vollumfänglich, von einer Beschichtung umgeben. Die vorzugsweise aus Silikon bestehende Beschichtung schützt das Spannband vor Umwelteinflüssen und verhindert eine Beschädigung der Außenwand des Turms.

In einer weiteren Ausführungsform weist die Spannvorrichtung mindestens einen Befestigungsschuh mit einer Unterseite und einem Befestigungsmittel auf, wobei der Befestigungsschuh eine mit dem Spannband in Kontakt zu bringende Spannfläche aufweist, die so angeordnet ist, dass der Befestigungsschuh durch das auf die Spannfläche wirkende Spannband an den ersten Gegenstand, hier der Turm einer Windkraftanlage, angepresst und so daran befestigtwird. An dem Befestigungsschuh kann mit einem Befestigungsmittel ein weiterer Gegenstand, wie beispielsweis ein Messgerät oder eine Radargerät oder -reflektor, an dem Spannband befestigt werden. Die der Spannfläche gegenüberliegende Unterseite des Befestigungsschuhs kann den Befestigungsschuh gegenüber der Außenwand des Turms abstützen.

In einer weiteren Ausführungsform weist der Befestigungsschuh, genauer die Spannfläche des Befestigungsschuhs, eine Führung für das Spannband auf. Beim Befestigen wird das Spannband in die Führung für das Spannband eingelegt, sodass beim Spannen der Spannvorrichtung der Befestigungsschuh mit seiner Unterseite an die Außenwand des Turms gedrückt wird, wobei die Führung für das Spannband ein Verrutschen des Spannbandes am Befestigungsschuh verhindert.

In einer Ausführungsform ist ein weiteres Befestigungsmittel an dem Befestigungsschuh vorzugsweise um eine feste Achse verschwenkbar. Das Befestigungsmittel kann beispielsweise eine an dem Befestigungsschuh verschwenkbar gelagerte Gewindestange sein. Mit der Gewindestange kann ein Messgerät oder ein anderer Gegenstand verschraubt werden. In einer Ausführungsform ist das Befestigungsmittel in einem verschwenkten Zustand arretierbar

In einer weiteren Ausführungsform weist die Unterseite des Befestigungsschuhs eine Beschichtung aus Silikon und/oder eine schwingungsdämpfende Unterlegplatte, vorzugsweise aus Silikon, auf.

Für die Befestigung größerer Messgeräte weist die Spannvorrichtung in einer Ausführungsform einen Befestigungsrahmen für ein Messgerät, vorzugsweise für eine Radaranlage, auf, wobei der Befestigungsrahmen mit dem jeweiligen Befestigungsmittel eines und vorzugsweise mehrerer Befestigungsschuhe verbindbar ist. Im Betrieb der Vorrichtung bilden das Spannband und die Spannvorrichtung einen Ring, der um ein Objekt, beispielsweise einen Turm einer Windkraftanlage, herumgelegt ist. Das Spannband steht mit einem oder mehreren Befestigungsschuhen in Eingriff, der bzw. die wiederrum über das Befestigungsmittel mit dem Befestigungsrahmen verbunden ist bzw. sind. Auf diese Weise kann der Befestigungsrahmen an nahezu jeder beliebigen Stelle lösbar an einem Turm befestigt werden, ohne dass dessen Außenwand beschädigt wird. Die Unterseite des Befestigungsschuhs liegt im Betrieb der Vorrichtung an der Außenwand des Turms an und stützt so den Befestigungsrahmen gegenüber dem Turm ab. Der Befestigungsrahmen selbst dient dem Befestigen eines Messgerätes. Beispielsweise kann das Messgerät ein Radargerät sein. Vorzugweise weist die Spannvorrichtung zwei Befestigungsschuhe auf, die mit dem Befestigungsrahmen verbindbar sind.

Um den Einfluss von Schwingungen auf das Messgerät zu reduzieren, weist der Befestigungsrahmen in einer Ausführungsform eine schwingungsdämpfende Unterlegplatte, vorzugsweise aus Silikon, auf, die zwischen dem Befestigungsrahmen und einem Messgerät anzuordnen ist

Die Spannvorrichtung oder Teile hiervon können einen Überzug aus Silikon aufweisen und/oder aus einem salzwasserfesten Material, vorzugsweise Edelstahl, hergestellt sein.

Weitere Vorteile, Merkmale und Anwendungsmöglichkeiten der vorliegenden Erfindung werden deutlich anhand der folgenden Beschreibung von bevorzugten Ausführungsformen und den dazugehörigen Figuren. Es zeigen:
- Figur 1:: eine schematische Perspektivansicht auf eine Spannvorrichtung gemäß einer Ausführungsform der vorliegenden Erfindung;
- Figur 2:: eine schematische Ansicht auf eine weitere Ausführungsform der vorliegenden Erfindung mit einem Befestigungsschuh; und
- Figur 3:: eine schematische Detailansicht eines Befestigungsschuhs gemäß der in der Figur 2 gezeigten Ausführungsform.

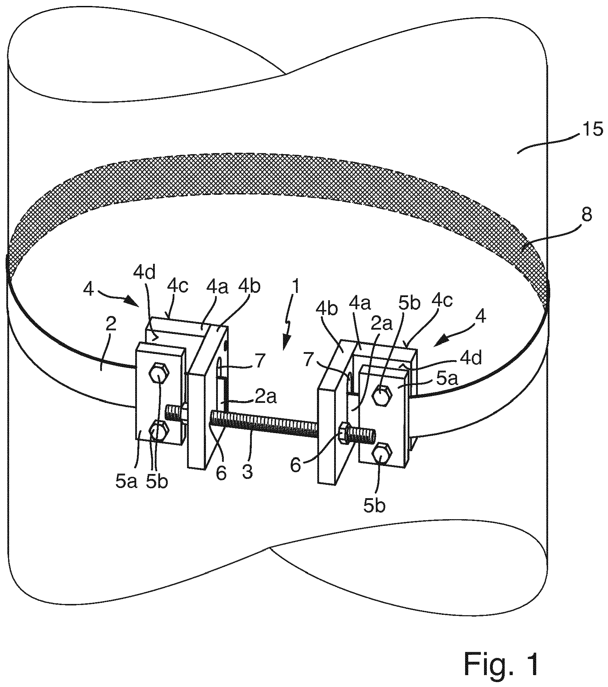

In der Figur 1 ist eine schematische Perspektivansicht auf eine Spannvorrichtung 1 gemäß einer Ausführungsform der vorliegenden Erfindung im Betrieb dargestellt. Die Spannvorrichtung 1 weist ein flaches Stahlband 2 auf, das aus Edelstahl hergestellt und im Betrieb der Vorrichtung um einen Gegenstand, wie beispielsweise einen Turm 15 (in der Figur 1 nur angedeutet), herumgeführt ist.

Die Spannvorrichtung 1 weist außerdem zwei gleichartig ausgestaltete Anschlussstücke 4 mit einem ersten und zweiten Schenkel 4a, 4b auf. Die ersten und zweiten Schenkel 4a, 4b der Anschlussstücke 4 bestehen aus je einer Edelstahlplatte, die miteinander zu einem L-Profil verschraubt sind. Der erste Schenkel 4a weist eine Unterseite 4c, eine Oberseite 4d und ein Klemmelement 5 auf, wobei der zweite Schenkel 4b senkrecht zu der Unterseite 4c des ersten Schenkels 4a angeordnet ist. Die Unterseite 4c des ersten Schenkels 4a liegt an der Außenwand des Turms 15 an und bildet eine Auflagefläche, die ein Verkippen oder Verdrehen des Anschlussstückes 4 verhindert. Damit die Außenwand des Turms 15 nicht beschädigt wird, weisen die Unterseite 4c des ersten Schenkels 4a und die Unterseite des Spannbandes 2 eine Beschichtung 8 aus Silikon auf.

Auf der Oberseite 4d des ersten Schenkels 4a ist das Klemmelement 5 angeordnet. Das Klemmelement 5 weist eine Platte 5a aus Edelstahl und Befestigungsmittel 5b auf. Bei der gezeigten Ausführungsform besteht das Befestigungsmittel 5b aus zwei Schrauben mit denen die Platte 5a auf die Oberseite 4c des ersten Schenkels 4a gepresst werden kann. Zum Befestigen der freien Enden 2a des Stahlbands 2 mit dem Klemmelement 5 wird das flache Stahlband 2 zwischen der Platte 5a und der Oberseite 4c des ersten Schenkels 4a angeordnet. Die freien Enden 2a des Stahlbands 2 werden bei dieser Ausführungsform zudem durch eine in dem zweiten Schenkel 4b des Anschlussstücks 4 vorhandene Öffnung 7 geführt, die in Längsrichtung des Stahlbandes und in der Verlängerung des Klemmenelementes angeordnet ist. Das durch die Öffnung hindurchgeführte Ende des Stahlbandes kann mit einem Werkzeug festgehalten werden, während die Platte 5a durch Anziehen der Schrauben 5b auf die Oberseite 4c des ersten Schenkels 4a gepresst und das Stahlband 2 zwischen der Platte 5a und der Oberseite 4c des ersten Schenkels 4 eingeklemmt wird. Anschließend kann das durch die Öffnung 7 in dem zweiten Schenkel 4b geführte Stahlband 2 gekürzt werden.

Der zweite Schenkel 4b der Anschlussstücke 4 weist eine Spannelementaufnahme 6, hier eine Bohrung, auf mit der ein Spannelement 3, hier eine Gewindestange, lösbar in Eingriff gebracht werden kann. Die zwei Anschlussstücke 4 sind über das Spannelement 3 miteinander verbunden, wobei jede Spannelementaufnahme 5 der zwei Anschlussstücke 4 eine Schraubenmutter aufweist, die mit der Gewindestange verschraubbar sind. Durch Betätigen der Schraubenmuttern wird der Abstand zwischen den Anschlussstücken 4 eingestellt. Werden die Schraubenmuttern aufeinander zubewegt, verringert sich der Abstand zwischen den Anschlussstücken 4 und das Stahlband 2 wird gespannt. Der Ring aus Spannband 2 und Spannvorrichtung 1 zieht sich zusammen und legt sich fest an die Außenwand des Turms 15 an. An dem Stahlband 2 können wiederrum eines oder mehrere Geräte befestigt werden.

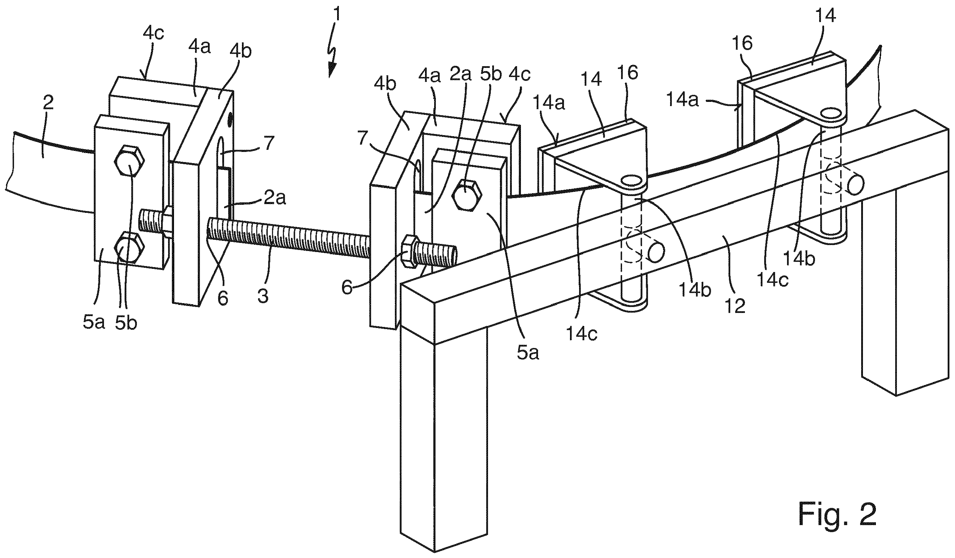

In der Figur 2 ist eine Ausführungsform zum Befestigen eines Messgerätes gezeigt. Die Spannvorrichtung entspricht im Wesentlichen der in Figur 1 gezeigten Ausführungsform, wobei die Spannvorrichtung weiter einen Befestigungsrahmen 12 (in der Figur 2 nur angedeutet) und zwei Befestigungsschuhe 14mit einer Unterseite 14a und einem Befestigungsmittel 14b aufweist. Jeder Befestigungsschuh 14 weist eine Führung 14c für das Stahlband 2 auf. Durch die Führung 14c in dem Befestigungsschuh 14 ist das Stahlband geführt und presst so den Befestigungsschuh 14 beim Spannen des Stahlbandes 2 mit seiner Unterseite 14a an die Außenwand des Turms 15. Die Unterseite 14a des Befestigungsschuhes 14 weist eine Silikonplatte 16 auf, die zwischen der Außenwand des Turms 15 und der Unterseite 14a des Befestigungsschuhes 14 angeordnet ist und schwingungsdämpfend wirkt.

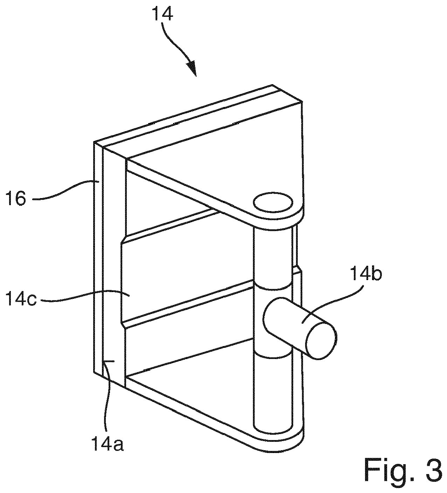

Eine Detailansicht des Befestigungsschuhs 14 ist in der Figur 3 dargestellt. Das Befestigungsmittel 14b des Befestigungsschuhs 14 ist eine Gewindestange, die relativ zu dem Befestigungsschuh 14 verschwenkbar und arretierbar ist. Die Gewindestange des Befestigungsschuhs ist durch eine Bohrung in dem Befestigungsrahmen 12 geführt und mit diesem verschraubt. An dem Befestigungsrahmen 12 ist ein Messgerät, hier eine Radaranlage, befestigbar.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur in Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

### Bezugszeichenliste

- 1: Spannvorrichtung
- 2: Spannband. Stahlband, Edelstahlband
- 2a: freies Ende des Spannbandes
- 3: Spannelement
- 4: Anschlussstück
- 4a: erster Schenkel des Anschlussstückes
- 4b: zweiter Schenkel des Anschlussstückes
- 4c: Unterseite des ersten Schenkels
- 4d: Oberseite des ersten Schenkels
- 5: Klemmelement
- 5a: Platte
- 5b: Befestigungsmittel
- 6: Spannelementaufnahme
- 7: Öffnung
- 8: Beschichtung
- 9: schwingungsdämpfende Unterlegplatte
- 10: Befestigungsrahmen
- 11: Messgerät
- 12: Beschichtung
- 13: schwingungsdämpfende Unterlegplatte
- 14: Befestigungsschuh
- 14a: Unterseite des Befestigungsschuhs
- 14b: Befestigungsmittel
- 14c: Führung
- 15: Turm

## Patentansprüche

1. Spannvorrichtung (1) für ein flaches Spannband (2), wobei die Spannvorrichtung (1) ein Spannelement (3) und zwei Anschlussstücke (4) mit je einer Spannelementaufnahme (6) für die lösbare Befestigung von einem Ende (3a) des Spannelementes (3), einer Oberseite (4d) und einer Unterseite (4c) aufweist, wobei die Anschlussstücke (4) über das Spannelement (3) lösbar miteinander und mit einem Spannband (2) verbindbar sind, **dadurch gekennzeichnet, dass** zumindest eines der Anschlussstücke (4) ein Klemmelement (5) zum lös- und einstellbaren Festklemmen eines Endabschnittes (2a) des Spannbandes (2) aufweist.

2. Spannvorrichtung (1) nach Anspruch 1, **dadurch gekennzeichnet, dass** das zumindest eine Anschlussstück (4) mit dem Klemmelement (5) aus Vollmaterial hergestellt ist, wobei Klemmelement (5) und Spannband (2) aus demselben zugfesten Material, wie zum Beispiel Stahl, und vorzugsweise aus witterungsbeständigem Material, z. B. aus Edelstahl oder einem Kompositmaterial, hergestellt sind.

3. Spannvorrichtung (1) nach Anspruch 1 oder 2, **dadurch gekennzeichnet, dass** das Klemmelement (5) eine Platte (5a) und Befestigungsmittel (5b) zum kraftschlüssigen Einklemmen des Spannbandes (2) zwischen der Platte (5a) und der Oberseite (4d) des Anschlussstückes (4) aufweist.

4. Spannvorrichtung (1) nach einem der Ansprüche 1 bis 3, **dadurch gekennzeichnet, dass** die einander zugewandten Flächen des Klemmelementes (5) und des Anschlussstücks (4) ein wechselseitig ineinandergreifendes, zum Beispiel wellenförmiges, Klemmprofil aufweisen

5. Spannvorrichtung (1) nach einem der Ansprüche 1 bis 4, **dadurch gekennzeichnet, dass** das zumindest eine Anschlussstück (4) mit dem Klemmelement (5) eine vorzugsweise schlitzförmige Öffnung (7) zum Hindurchführen des Spannbands (2) aufweist.

6. Spannvorrichtung (1) nach einem der Ansprüche 1 bis 5, **dadurch gekennzeichnet, dass** zumindest das Anschlussstück (4) mit dem Klemmelement (5) ein im Wesentlichen L-förmiges Profil mit einem ersten Schenkel (4a) und einem zweiten Schenkel (4b) aufweist, wobei der erste Schenkel (4a) die Unterseite (4c) des Anschlussstücks (4), eine Oberseite (4d) sowie das Klemmelement (5) und der zweite Schenkel (4b) die Spannelementaufnahme (6) aufweist.

7. Spannvorrichtung (1) nach Anspruch 6 mit Rückbezug auf Anspruch 5, **dadurch gekennzeichnet, dass** der zweite Schenkel (4b) die Öffnung (7) zum Hindurchführen des Spannbands (2) aufweist, die unmittelbar oberhalb oder auf der Ebene der Oberseite (4d) des ersten Schenkels (4a) mündet.

8. Spannvorrichtung (1) nach Anspruch 6 oder 7, **dadurch gekennzeichnet, dass** das Klemmelement (5) über der Oberseite (4d) des ersten Schenkels (4a) angeordnet ist.

9. Spannvorrichtung nach einem der Ansprüche 1 bis 8, **dadurch gekennzeichnet, dass** das Spannelement (3) eine Gewindestange und die Spannelementaufnahme (6) eine Bohrung ist.

10. Spannvorrichtung (1) nach einem der Ansprüche 1 bis 9, **dadurch gekennzeichnet, dass** die Unterseite (4c) des zumindest einen Anschlussstückes (4) mit dem Klemmelement (5) eine Beschichtung (8), vorzugsweise aus Silikon, und/oder eine schwingungsdämpfende Unterlegplatte (9), vorzugsweise aus Silikon, aufweist.

11. Spannvorrichtung (1) nach einem der Ansprüche 1 bis 10, **dadurch gekennzeichnet, dass** beide Anschlussstücke (4) gleich ausgestaltet und jeweils mit einem freien Ende (2a) des Spannbandes (2) verbunden sind.

12. Spannvorrichtung (1) nach einem der Ansprüche 1 bis 11, **dadurch gekennzeichnet, dass** das Spannband (2) zumindest auf einer Seite, vorzugsweise vollumfänglich, eine Beschichtung (8) aus Silikon aufweist.

13. Spannvorrichtung (1) nach einem der Ansprüche 1 bis 12, **dadurch gekennzeichnet, dass** die Spannvorrichtung (1) mindestens einen Befestigungsschuh (14) mit einer Unterseite (14a) und einem Befestigungsmittel (14b) aufweist, wobei der Befestigungsschuh (14) eine Spannfläche für den Eingriff mit dem Spannband (2) aufweist.

14. Spannvorrichtung (1) nach Anspruch 13, **dadurch gekennzeichnet, dass** das Befestigungsmittel (14b) relativ zu dem Befestigungsschuh (14) vorzugsweise um eine feste Achse verschwenkbar ist.

15. Spannvorrichtung (1) nach Anspruch 14, **dadurch gekennzeichnet, dass** das Befestigungsmittel (14b) in mindestens einer Schwenkposition arretierbar ist.

16. Spannvorrichtung (1) nach einem der Ansprüche 13 bis 15, **dadurch gekennzeichnet, dass** die Unterseite (14a) des Befestigungsschuhs (14) eine Beschichtung (15) aus Silikon und/oder eine schwingungsdämpfende Unterlegplatte (16), vorzugsweise aus Silikon, aufweist.

17. Spannvorrichtung (1) nach einem der Ansprüche 13 bis 16, **dadurch gekennzeichnet, dass** die Spannvorrichtung (1) einen Befestigungsrahmen (12) für ein Messgerät (13), vorzugsweise für eine Radaranlage, aufweist, wobei der Befestigungsrahmen (12) mit dem Befestigungsmittel des mindestens einen Befestigungsschuhs (14) verbindbar ist.
